# EUROPEAN PATENT APPLICATION

(11) **EP 4 819 259 A1**
(43) Date of publication of application: **07.10.2026**
(21) Application number: 24897946.0
(22) Date of filing: 08.11.2024
(51) Int. Cl.: H01M 8/0656, H01M 8/04082, H01M 8/04089, H01M 8/0662, H01M 8/04014, H01M 8/04119, H01M 8/12

(54) **SOLID OXIDE FUEL CELL RECIRCULATION SYSTEM**

(30) Priority: 30.11.2023 KR 20230171625
(71) Applicant: Korea Institute of Machinery & Materials, Daejeon 34103 (KR)
(72) Inventor: PARK, Jin Young, Incheon 21996 (KR); LEE, Dong Keun, Seoul 08826 (KR); BAE, Yong Gyun, Daejeon 34103 (KR); KIM, Young Sang, Daejeon 34070 (KR); AHN, Kook-Young, Daejeon 34150 (KR)
(74) Representative: Witte, Weller & Partner Patentanwälte mbB
(86) International application number: PCT/KR2024/017683
(87) International publication number: WO 2025/116350

(57) **Abstract**

A solid oxide fuel cell recirculation system using an electrochemical hydrogen pump according to one embodiment of the present invention comprises: a solid oxide fuel cell which receives ammonia and air to generate electricity through an electrochemical reaction, and discharges a reaction product containing nitrogen, hydrogen, and water vapor, and exhaust gas having reduced oxygen concentration; an ammonia supply unit for supplying the ammonia to the solid oxide fuel cell; an air supply unit for supplying the air to the solid oxide fuel cell; and an electrochemical hydrogen pump for separating only the hydrogen from the reaction product of the solid oxide fuel cell and resupplying the separated hydrogen to the solid oxide fuel cell.

## Description

### Technical Field

The present disclosure relates to a solid oxide fuel cell (SOFC) recirculation system using an electrochemical hydrogen pump (EHP) which uses a proton exchange membrane and operates at a temperature of 100°C or lower, and more specifically to an SOFC recirculation system using an EHP which separates only hydrogen from a mixed gas of nitrogen and hydrogen, produced by decomposing ammonia, and selectively causes the separated hydrogen to recirculate, thereby improving overall system efficiency and a concentration of hydrogen in fuel.

### Background Art

Recently, researches on the production of eco-friendly hydrogen fuel using hydrogen gas to generate energy are increasing.

While conventional sources of energy such as coal and oil contain carbon dioxide, hydrogen gas contains no carbon dioxide at all and is mostly converted into water, so after they are used as energy sources, no unnecessary byproducts are generated.

Furthermore, since a large amount of energy may be generated upon conversion to water, a method of producing energy using hydrogen gas is environmentally friendly and may produce an ideal energy source, leading to increasing interest in related technologies.

Meanwhile, among methods for producing hydrogen gas to use hydrogen as an energy source, a method for using ammonia NH3 as a hydrogen carrier is drawing attention.

A solid oxide fuel cell (SOFC) system, which is one of the various fuel cell systems for using ammonia as hydrogen fuel, operates in a high-temperature range of over 600°C and is known to have the highest efficiency among the various fuel cell systems, and since the SOFC system is able to generate power using various fuels such as H2, CH4, CO, and NH series, a lot of researches are currently being conducted on the SOFC recirculation system.

In general, a maximum fuel utilization rate of the SOFC recirculation system is about 80%, and the remaining 20% of the fuel is wasted without being reacted, and when hydrogen is generated from ammonia using the SOFC recirculation system, a maximum utilization rate is lower than 80%, so, in order to improve the efficiency of the system, a structure is required to recirculate unreacted fuel that is discharged.

To this end, conventional SOFC recirculation systems generate hydrogen from ammonia by recirculating, using a blower, the unreacted fuel that is discharged.

However, a fuel recirculation method using a blower has a problem in that it is difficult to determine an amount of recirculated fuel, and nitrogen and hydrogen cannot be separated, such that nitrogen, which is an unnecessary reaction product, is recirculated and reacts together with hydrogen, thereby causing a decrease in hydrogen yield and hydrogen concentration and resulting in low fuel efficiency.

In addition, there are problems in that nitrogen is recirculated along with hydrogen, increasing the flow rate in the fuel piping lines, which raises the differential pressure, dilutes the hydrogen concentration, degrades the performance of an SOFC, and consequently reduces the overall system efficiency.

Therefore, there is a need for a method for preventing unnecessary nitrogen recirculation and a consequent increase in differential pressure in piping lines, and for improving fuel efficiency by separating hydrogen from nitrogen and recirculating only the separated hydrogen.

### Disclosure of Invention

### Technical Goals

Based on the above technical background, an objective of the present disclosure is to provide an SOFC (SOFC) recirculation system using an electrochemical hydrogen pump (EHP) which employs a proton exchange membrane and operates at a temperature of 100°C or lower, thereby separating hydrogen from a mixed gas of nitrogen and hydrogen generated by decomposition of ammonia, selectively recirculating the separated hydrogen to reduce a pressure difference in a pipeline that may occur due to unnecessarily generated nitrogen, and improving overall efficiency by increasing a hydrogen concentration in a fuel.

### Technical Solutions

A solid oxide fuel cell (SOFC) recirculation system using an electrochemical hydrogen pump (EHP) according to an embodiment of the present disclosure may include: an SOFC configured to generate electricity through an electrochemical reaction by receiving ammonia and air and discharge a reaction product comprising nitrogen, hydrogen, and water vapor, and a vent gas having a reduced oxygen concentration; an ammonia supply unit configured to supply the ammonia to the SOFC; an air supply unit configured to supply the air to the SOFC; and an EHP configured to separate only hydrogen from the reaction product of the SOFC and resupply the separated hydrogen to the SOFC.

### Effects of Invention

As described above, according to the present disclosure, an electrochemical hydrogen pump (EHP) is applied to an SOFC (SOFC) system to separate hydrogen from a mixed gas of nitrogen and hydrogen and to selectively recirculate only the separated hydrogen, thereby increasing a hydrogen concentration, and to prevent an increase in differential pressure due to unnecessary nitrogen circulation and reduce heat exchange loss, thereby increasing a capacity of an SOFC and increasing the overall efficiency of the SOFC recirculation system.

### Brief Description of Drawings

FIG. 1 is a schematic diagram showing an SOFC (SOFC) recirculation system using an electrochemical hydrogen pump (EHP) according to a first embodiment of the present disclosure.
FIG. 2 is a schematic diagram showing a process of separating hydrogen from ammonia vent gas mixed with nitrogen and hydrogen in an SOFC recirculation system using an EHP according to the first embodiment of the present disclosure.
FIG. 3 is a schematic diagram showing an SOFC recirculation system using an EHP according to a second embodiment of the present disclosure.
FIG. 4 is a schematic diagram showing the process in which external air is introduced into a heating unit and heated, and then the heated air is mixed with a vent gas discharged from an SOFC and heat exchanged in an air heat exchanger in an SOFC recirculation system using an EHP according to the second embodiment of the present disclosure.
FIG. 5 is a schematic diagram showing an SOFC recirculation system using an EHP according to a third embodiment of the present disclosure.
FIG. 6 is a schematic diagram showing the process in which nitrogen or nitrogen and hydrogen discharged from an EHP in an SOFC recirculation is introduced into a heating unit and heated, and then the heated nitrogen or nitrogen and hydrogen is mixed with a vent gas discharged from an SOFC and heat exchanged in an air heat exchanger.
FIG. 7 is a schematic diagram showing an SOFC recirculation system using an EHP according to the fourth embodiment of the present disclosure.
FIG. 8 is a schematic diagram showing a process in which external air and nitrogen or nitrogen and hydrogen discharged from the EHP are introduced into a heating unit, mixed and heated, and then the heated mixed gas is mixed with a vent gas discharged from the SOFC and heat-exchanged in an air heat exchanger in an SOFC recirculation system using an EHP according to the fourth embodiment of the present disclosure.

### Best Mode for Carrying out the Invention

A solid oxide fuel cell (SOFC) recirculation system using an electrochemical hydrogen pump (EHP) according to an embodiment of the present disclosure may include: an SOFC configured to generate electricity through an electrochemical reaction by receiving ammonia and air and discharge a reaction product comprising nitrogen, hydrogen, and water vapor, and a vent gas having a reduced oxygen concentration; an ammonia supply unit configured to supply the ammonia to the SOFC; an air supply unit configured to supply the air to the SOFC; and an EHP configured to separate only hydrogen from the reaction product of the SOFC and resupply the separated hydrogen to the SOFC.

According to the present embodiment, the SOFC recirculation system may further include: a fuel heat exchanger configured to exchange heat between the high-temperature reaction product discharged after reaction in the SOFC and the ammonia supplied to the SOFC;
an air heat exchanger configured to exchange heat between the high-temperature vent gas discharged after reaction in the SOFC and the air supplied to the SOFC; and a condensation unit configured to condense the reaction product heat-exchanged through the fuel heat exchanger.

According to the present embodiment, the condensation unit may include: a cooling heat exchanger configured to condense the water vapor through heat exchange with the reaction product supplied through the fuel heat exchanger; and a drain unit configured to discharge water condensed through the cooling heat exchanger to an outside.

According to the present embodiment, the EHP may separate the hydrogen from a mixed gas of the nitrogen and the hydrogen, and selectively mixes the separated hydrogen with the ammonia that is supplied from the ammonia supply unit to the fuel heat exchanger.

According to the present embodiment, the EHP may control an amount of hydrogen separated from the mixed gas by controlling a current load.

According to the present embodiment, the SOFC recirculation system may further include a heating unit configured to increase a temperature of the air supplied from the air supply unit.

According to the present embodiment, the heating unit may be either a burner or a catalytic converter.

According to the present embodiment, the heating unit may heat the vent gas discharged from the SOFC.

According to the present embodiment, the heating unit may draw and heat external air, and mixes the heated external air with the vent gas to heat the vent gas.

According to the present embodiment, the heating unit may receive, from the EHP, the nitrogen from which the hydrogen has been removed.

According to the present embodiment, the ammonia supply unit may have a fuel blower provided at one side thereof to supply the ammonia to the SOFC.

According to the present embodiment, the air supply unit may have an air blower provided at one side thereof to supply the air to the SOFC.

According to the present embodiment, the EHP may operate at a temperature of 50°C to 100°C.

According to the present embodiment, the SOFC recirculation system may further include a control unit configured to control operation of the SOFC, the ammonia supply unit, the air supply unit, and the EHP.

According to the present embodiment, the control unit controls an amount of the separated hydrogen by controlling a current load applied to the EHP.

### Mode for Carrying Out the Invention

The disclosure may be variously modified and have various embodiments, and specific embodiments are illustrated in the drawings and described in detail below. However, the present disclosure is not limited to the specific embodiments, and it should be understood that the present disclosure includes all modifications, equivalents, or substitutions included in the idea and technical scope of the present disclosure.

The terminology used herein is for describing various examples only and is not to be used to limit the present disclosure. As used herein, the singular forms "a," "an," and "the" are intended to include the plural forms as well, unless the context clearly indicates otherwise. In the present disclosure, it should be understood that terms such as "include" or "have" are intended to specify the presence of a feature, number, step, operation, component, part, or combination thereof, but do not preclude the presence or addition of one or more other features, numbers, steps, operations, components, parts, or combinations thereof.

Hereinafter, embodiments of the present disclosure will be described with reference to the accompanying drawings. It is noted that the same components in the accompanying drawings are represented by the same reference numerals as much as possible. Further, detailed descriptions of well-known functions and configurations that may obscure the subject matter of the present disclosure will be omitted. For the same reason, some components are exaggerated, omitted, or schematically illustrated in the accompanying drawings.

Hereinafter, a solid oxide fuel cell (SOFC) recirculation system using an electrochemical hydrogen pump (EHP) according to a first embodiment of the present disclosure will be described.

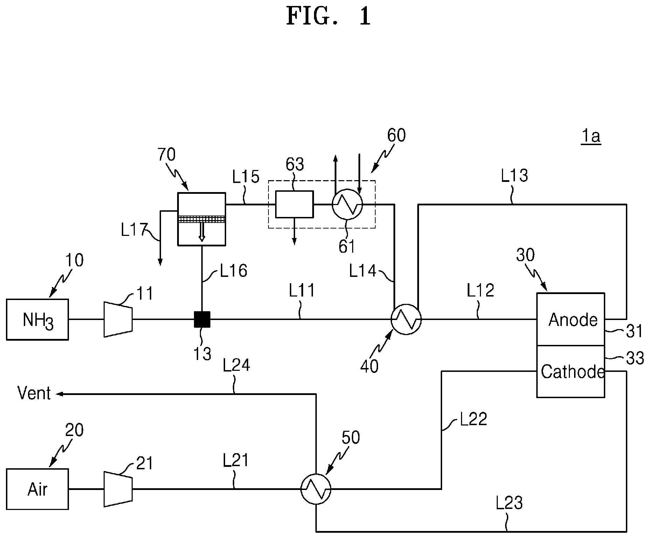

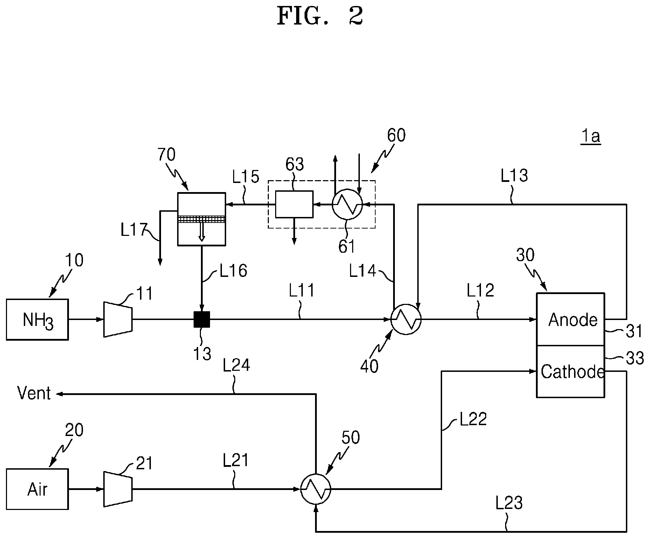

FIG. 1 is a schematic diagram showing an SOFC recirculation system using an EHP according to a first embodiment of the present disclosure. FIG. 2 is a schematic diagram showing the process of separating hydrogen from ammonia vent gas mixed with nitrogen and hydrogen in an SOFC recirculation system using an EHP according to the first embodiment of the present disclosure.

Referring to FIG. 1, an SOFC recirculation system 1a using an EHP according to the present disclosure may include an ammonia supply unit 10, an air supply unit 20, an SOFC 30, a fuel heat exchanger 40, an air heat exchanger 50, a condensation unit 60, an EHP 70, a piping assembly (not shown), and a control unit (not shown).

The ammonia supply unit 10 is configured to supply ammonia NH3 as fuel to the SOFC 30, and may be provided at a front end of the SOFC recirculation system 1a using an EHP according to the present embodiment.

Here, a valve for supplying ammonia may be installed between the ammonia supply unit 10 and the SOFC 30. The ammonia supply unit 10 may be heated and/or pressurized, and accordingly, a supply of ammonia in the ammonia supply unit 10 to the SOFC 30 may be provided or stopped according to the operation of the valve.

As an optional embodiment, a fuel blower 11 may be installed between the ammonia supply unit 10 and the SOFC 30 to supply ammonia from the ammonia supply unit 10 to the SOFC 30.

The air supply unit 20 is configured to supply air to the SOFC 30 and may be provided at a front end of the SOFC recirculation system 1a using the EHP according to the present embodiment.

Here, the air supplied to the SOFC 30 through the air supply unit 20 refers to air and oxygen, and may react with the ammonia supplied through the ammonia supply unit 10 in the SOFC 30, thereby generating a reaction product such as nitrogen, hydrogen, water vapor, vent gas, and the like.

A valve for controlling an air supply may be disposed between the air supply unit 20 and the SOFC 30. In an optional embodiment, an air blower 21 may be installed between the air supply unit 20 and the SOFC 30 to supply air from the air supply unit 20 to the SOFC 30.

The SOFC (SOFC) 30 may receive ammonia and air as fuel from the ammonia supply unit 10 and the air supply unit 20 to generate electricity through an electrochemical reaction. In addition, the supplied ammonia is converted to generate nitrogen and hydrogen, and water vapor may be discharged through the electrochemical reaction of the SOFC 30. In addition, the air supplied from the air supply unit 20 has a reduced oxygen concentration and is discharged from the SOFC 30.

In the following, nitrogen and hydrogen generated by the conversion of ammonia and water vapor produced by the electrochemical reaction of the SOFC 30 are collectively referred to as a reaction product, and air with a reduced oxygen concentration discharged from the SOFC 30 is referred to as a vent gas.

Here, the SOFC 30 has a general configuration, and thus will be described briefly below.

The SOFC 30 includes an ion conductive membrane (not shown) that allows movement of oxygen ions, an anode electrode 31 and a cathode electrode 33 provided on one side and the other side of the ion conductive membrane, and may be a stack formed by stacking the ion conductive membrane, an anode electrode 31, and a cathode electrode 33.

Ammonia supplied from the ammonia supply unit 10 is converted (decomposed) into hydrogen and nitrogen in the stack of the SOFC 30, and the decomposed hydrogen may react with oxygen ions at the anode electrode 31, thereby generating electricity and water vapor.

Oxygen supplied from the air supply unit 20 obtains electrons at the cathode electrode 33 and is reduced to oxygen ions, then moves to the anode electrode 31 through the ion conductive membrane and reacts with hydrogen decomposed from ammonia, thereby generating electricity and water vapor.

Meanwhile, the fuel heat exchanger 40 and the air heat exchanger 50 may recover heat from a high-temperature reaction product and vent gas generated through the SOFC 30 that operates at high temperature.

The fuel heat exchanger 40 may be connected to the anode electrode 31 side of the SOFC 30, and an air heat exchanger 50 may be connected to the cathode electrode 33 side of the SOFC 30.

The fuel heat exchanger 40 may recover heat from a reaction product such as nitrogen, hydrogen, and water vapor, which are discharged after reaction in the SOFC 30 and whose temperature is increased due to the reaction.

Specifically, the fuel heat exchanger 40 may increase the temperature of the ammonia supplied to the SOFC 30 through heat exchange between the high-temperature reaction product discharged from the SOFC 30 and the ammonia supplied from the ammonia supply unit 10.

The fuel heat exchanger 40 may be provided between the ammonia supply unit 10 and the SOFC 30, but is not limited thereto.

The air heat exchanger 50 may recover heat from a vent gas, such as flue gas, which is discharged after reaction in the SOFC 30 and whose temperature is increased due to the reaction.

Specifically, the air heat exchanger 50 may increase the air supplied to the SOFC 30 to a predetermined temperature through heat exchange between the high-temperature vent gas discharged from the SOFC 30 and the air supplied from the air supply unit 20.

The air heat exchanger 50 may be provided between the air supply unit 20 and the SOFC 30, but is not limited thereto.

The condensation unit 60 may condense a reaction product whose temperature is lowered after heat exchange through the fuel heat exchanger 40. Since a maximum fuel utilization rate of the SOFC 30 is about 80%, a reaction product including nitrogen, hydrogen, and water vapor discharged from the anode electrode 31 may be condensed, and the water generated by the condensation may be recovered and discharged, thereby increasing the partial pressure of hydrogen and nitrogen.

To this end, the condensation unit 60 may include a cooling heat exchanger 61 for cooling and condensing a reaction product, and a drain unit 63 for draining and discharging the water condensed through the cooling heat exchanger 61.

The cooling heat exchanger 60 may supply cold water having a predetermined temperature from the outside to lower the temperature of the reaction product, which is lowered to a predetermined temperature through the fuel heat exchanger 40, to a predetermined temperature once again.

The EHP 70 may separate and extract only hydrogen from various mixed gases using an electrochemical reaction.

The EHP 70 may separate only hydrogen from a reaction product of the SOFC 30 and resupply the hydrogen to the SOFC 30. Specifically, the EHP 70 may separate only hydrogen from a mixed gas including nitrogen and hydrogen using a proton exchange membrane. Meanwhile, a proton exchange membrane may exhibit conductivity and excellent performance when wetted with water. Therefore, the EHP 70 may be operated at a temperature of 100°C or lower so that water does not vaporize under atmospheric pressure. However, if the operating temperature of the EHP 70 drops below 50°C, the resistance to movement of hydrogen ions may increase, thereby reducing the operating efficiency of the EHP 70. Accordingly, the operating temperature of the EHP 70 may be higher than or equal to 50°C or lower than or equal to 100°C. However, under a pressurized condition, it may be operated at a temperature higher than 100°C as long as the water does not vaporize.

The EHP 70 may pump and discharge only hydrogen from a mixed gas of nitrogen and hydrogen through a condensation unit 60 with low power.

Here, since an amount of hydrogen pumped is proportional to an appliled current load, the EHP 70 may recirculate a desired amount of hydrogen by controlling the current load and may be easily controlled compared to a conventional blower (not shown).

In addition, by controlling the current load, an immediate reaction rate may be achieved, allowing for rapid control of the amount of hydrogen separated from the mixed gas of nitrogen and hydrogen.

Therefore, even if a differential pressure in the piping changes due to the concentration of ammonia as fuel in the piping line and the nitrogen discharged from the EHP 70, the desired amount of hydrogen may be easily recirculated.

Thus, the EHP 70 may selectively control an amount of hydrogen separated from a mixed gas of nitrogen and hydrogen by controlling a current load, and may also control an amount of hydrogen to be recirculated and a recirculation flow rate by controlling the current load.

The piping assembly may include a 11th piping line L11 connecting the ammonia supply unit 10 and the fuel heat exchanger 40, a 12th piping line L12 connecting the fuel heat exchanger 40 and the SOFC 30, a 13th piping line L13 connecting the SOFC 30 and the fuel heat exchanger 40, a 14th piping line L14 connecting the fuel heat exchanger 40 and the condensation unit 50, a 15th piping line L15 connecting the condensation unit 60 and the EHP 70, a 16th piping line L16 connecting the EHP 70 and the 11th piping line L11, and a 17th piping line L17 connected to the EHP 70 to discharge nitrogen.

Specifically, the 11th piping line L11 connects the ammonia supply unit 10 and the fuel heat exchanger 40, and may supply ammonia, supplied as fuel from the ammonia supply unit 10, to the fuel heat exchanger 40.

The 12th piping line L12 may connect the fuel heat exchanger 40 and the SOFC 30.

The 13th piping line L13 connects the SOFC 30 and the fuel heat exchanger 40, and may supply a high-temperature reaction product, which is discharged after reaction in the SOFC 30 and includes nitrogen, hydrogen, and water vapor, to the fuel heat exchanger 40.

Accordingly, the high-temperature reaction product supplied from the SOFC 30 to the fuel heat exchanger 40 through the 13th piping line L13 and the ammonia supplied from the ammonia supply unit 10 to the fuel heat exchanger 40 through the 11th piping line L11 exchange heat with each other in the fuel heat exchanger 40, and the ammonia whose temperature is increased due to heat exchange may be supplied to the anode electrode 31 of the SOFC 30.

The 14th piping line L14 connects the fuel heat exchanger 40 and the condensation unit 60, and may supply a reaction product, whose temperature has been lowered after heat exchange with ammonia in the fuel heat exchanger 40, to the condensation unit 60.

The cooling heat exchanger 61 and the drain unit 63 of the condensation unit 60 may be installed in the 14th piping line L14.

The 15th piping line L15 connects the condensation unit 60 and the EHP 70, and may supply a mixed gas of nitrogen and hydrogen, from which moisture has been removed through the condensation unit 60, to the EHP 70.

The 16th piping line L16 connects the EHP 70 and the 11th piping line L11, and may supply hydrogen separated in the EHP 70 to the 11th piping line L11.

Here, a first mixer 13 may be installed at a connection point between the 11th piping line L11 and the 16th piping line L16, and the first mixer 13 may mix hydrogen supplied from the EHP 70 through the 16th piping line L16 with ammonia supplied from the ammonia supply unit 10 to the SOFC 30 through the 11th piping line L11.

The 17th piping line L17 may be connected to one side of the EHP 70 to discharge nitrogen separated in the EHP 70.

In addition, the 17th piping line L17 may be connected to one side of the EHP 70 to discharge a mixed gas of nitrogen and some hydrogen.

The piping assembly may include a 21st piping line L21 connecting the air supply unit 20 and the air heat exchanger 50, a 22nd piping line L22 connecting the air heat exchanger 20 and the SOFC 30, a 23rd piping line L23 connecting the SOFC 30 and the air heat exchanger 50, and a 24th piping line L24 connected to the air heat exchanger 50 to discharge a reacted vent gas.

Specifically, the 21st piping line L21 connects the air supply unit 20 and the air heat exchanger 50, and may supply air, supplied from the air supply unit 20, to the air heat exchanger 50.

The 22nd piping line L22 may connect the air heat exchanger 20 and the SOFC 30.

The 23rd piping line L23 connects the SOFC 30 and the air heat exchanger 50, and may supply a vent gas discharged after reaction in the SOFC 30 to the air heat exchanger 50.

Accordingly, a high-temperature vent gas supplied from the SOFC 30 to the air heat exchanger 50 through the 23rd piping line L23 and air supplied from the air supply unit 20 to the air heat exchanger 50 through the 21st piping line L21 exchange heat with each other in the air heat exchanger 50, and the air whose temperature is increased due to the heat exchange may be supplied to the cathode electrode 33 of the SOFC 30.

The 24th piping line L24 may be connected to the air heat exchanger 50 to discharge a vent gas with a lowered temperature after heat exchange with air supplied to the SOFC 30 through the air heat exchanger 50.

The control unit may be connected to the ammonia supply unit 10 to control a flow rate of ammonia supplied to the SOFC 30 through the ammonia supply unit 10.

The control unit may be connected to the air supply unit 20 to control a flow rate of air supplied to the SOFC 30 through the air supply unit 20.

The control unit may be controllably connected to the SOFC 30.

The control unit may be controllably connected to the EHP 70. Specifically, by controlling a current load applied to the EHP 70, the control unit may control an amount of hydrogen separated from the mixed gas including nitrogen and hydrogen through the EHP 70.

In addition, the control unit may control the current load applied to the EHP 70 to selectively supply hydrogen separated from nitrogen through the EHP 70 to the ammonia supplied to the SOFC 30.

The control unit may further include a sensor for measuring a concentration of ammonia supplied as fuel and concentrations of reaction products such as hydrogen, nitrogen, water vapor, vent gas, and the like, produced by reacting ammonia, and the sensor may be installed in the piping assembly to measure each concentration and then transmit a result of measurement to the control unit.

Hereinafter, with reference to FIG. 2, a process of producing hydrogen from ammonia through an SOFC recirculation system using an EHP according to the first embodiment of the present disclosure, and a process of separating only hydrogen from a mixed gas including nitrogen and hydrogen and selectively supplying hydrogen will be explained.

Ammonia is supplied from the ammonia supply unit 10 to the SOFC 30 through the 11th piping line L11 and the 12th piping line L12.

Here, the fuel blower 11 provided between the ammonia supply unit 10 and the SOFC 30 is driven to supply ammonia from the ammonia supply unit 10 to the SOFC 30.

Air is supplied from the air supply unit 20 to the SOFC 30 through the 21st piping line L21 and the 22nd piping line L22.

Here, a first air blower 21 provided between the air supply unit 20 and the SOFC 30 is driven to supply air from the air supply unit 20 to the SOFC 30.

Ammonia and air supplied to the SOFC 30 ionize oxygen at the cathode electrode 33 of the SOFC 30, and the ionized oxygen ions move through the ion conductive membrane and then produce reaction products including electricity and water vapor through a reaction with hydrogen modified from ammonia at the anode electrode 31. The reaction products may include oxygen ions, unreacted hydrogen, nitrogen reformed from ammonia, and water vapor produced by reaction of hydrogen and oxygen ions.

The reaction products produced at the anode electrode 31 of the SOFC 30 is supplied to the fuel heat exchanger 40 through the 13th piping line L13, and a high-temperature reaction product supplied to the fuel heat exchanger 40 exchanges heat with ammonia supplied from the ammonia supply unit 10 to the fuel heat exchanger 40 through the 11th piping line L11 and is then supplied to the condensation unit 60 through the 14th piping line L14.

Ammonia, whose temperature is increased after heat exchange with the high-temperature reaction product in the fuel heat exchanger 40, is supplied to the SOFC 30 and decomposed into hydrogen and nitrogen.

While the above process is performed repeatedly, the ammonia with a raised temperature is supplied to the SOFC 30, and the reaction product with a lowered temperature is supplied to the condensation unit 60.

The reaction product supplied to the condensation unit 60 is cooled and condensed through the cooling heat exchanger 61, and at this time, the water vapor is condensed into water and discharged through the drain unit 63.

The mixed gas including nitrogen and hydrogen, from which moisture has been discharged through the condensation unit 60, is supplied to the EHP 70 through the 15th piping line L15, and the proton exchange membrane of the EHP 70 is used and operated at a temperature of 50°C to 100°C to separate only hydrogen from the mixed gas.

Separated hydrogen is supplied to the first mixer 13 provided at a connection between the sixteenth piping line L16 and the eleventh piping line L11; ammonia supplied from the ammonia supply unit 10 toward the SOFC 30 is supplied to the first mixer 13; after pure hydrogen and ammonia are mixed in the first mixer 13, the mixture exchanges heat with a high-temperature reaction product in the fuel heat exchanger 40; and the hydrogen and ammonia, having an increased temperature through the heat exchange, are supplied to the SOFC 30 through the twelfth piping line L12.

As such, hydrogen may be repeatedly mixed with the ammonia supplied from the ammonia supply unit 10 to the SOFC 30, thereby increasing an overall concentration of hydrogen, and as a result, the electrochemical reaction efficiency of the SOFC 30 may be improved.

Nitrogen separated through the EHP 70 is discharged to the outside through the 17th piping line L17.

Meanwhile, a vent gas generated from the cathode electrode 33 of the SOFC 30 is supplied to the air heat exchanger 50 through the 23rd piping line L23, and a high-temperature vent gas supplied to the air heat exchanger 50 is discharged through the 24th piping line L24 after heat exchange with air supplied from the air supply unit 20 to the air heat exchanger 50 through the 21st piping line L21.

As such, the ammonia and air supplied to the SOFC 30 are discharged from the SOFC 30; and after undergoing heat exchange with the reaction product and vent gas, each having an increased temperature, the ammonia and air are heated to a predetermined temperature and then supplied back to the SOFC 30, thereby allowing the SOFC 30 to be operated under high-temperature conditions.

Hereinafter, an SOFC recirculation system using an EHP according to a second embodiment of the present disclosure will be described.

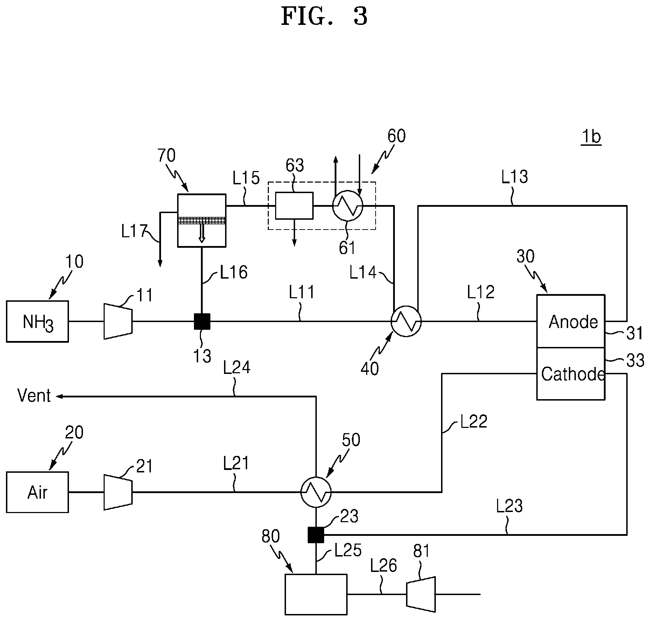

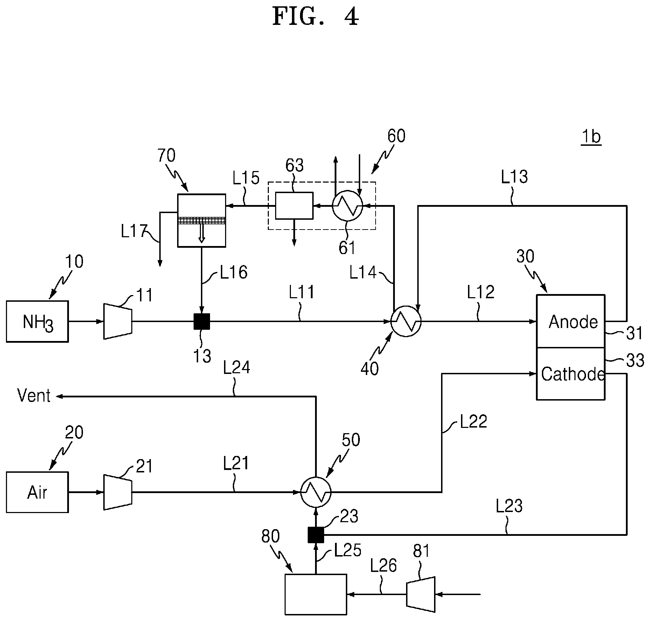

FIG. 3 is a schematic diagram showing an SOFC recirculation system using an EHP according to a second embodiment of the present disclosure. FIG. 4 is a schematic diagram showing the process in which external air is introduced into a heating section and heated, and then the heated air is mixed with a vent gas discharged from an SOFC and heat exchanged in an air heat exchanger in an SOFC recirculation system using an EHP according to the second embodiment of the present disclosure.

The SOFC recirculation system using an EHP according to the second embodiment of the present disclosure has the same structure as the SOFC recirculation system using an EHP according to the first embodiment described above, except for the heating section and the structure of the heating section; therefore, a redundant description of the same components is omitted.

Referring to FIGS. 3 and 4, an SOFC recirculation system 1b using an EHP according to a second embodiment of the present disclosure may include a heating unit 80.

The heating unit 80 is configured to further increase the temperature of a high-temperature vent gas discharged from an SOFC 30, and by heating the vent gas discharged once again after reaction in the SOFC 30 to increase the temperature of the vent gas, the temperature of the air that is supplied from an air supply unit 20 to an air heat exchanger 50 and then exchanges heat with the exhaust may be further increased.

The heating unit 80 may be either a burner or a catalytic converter and may be connected to an air heat exchanger 50. Specifically, the heating unit 80 may be connected to a 25th piping line L25 to a 23rd piping line L23 that connects the SOFC 30 and the air heat exchanger 50. Therefore, the 25th piping line L25 may connect the heating unit 80 and the 23rd piping line L23.

The heating unit 80 may be provided on one side thereof with a 26th piping line L26 for introducing external air into the heating unit 80.

Here, the 26th piping line L26 may be provided with a second air blower 81 for drawing an external air into the heating unit 80. Accordingly, the second air blower 81 may forcibly introduce an external air into the heating unit 80.

Here, a second mixer 23 may be installed at the connection point between the 23rd piping line L23 and the 25th piping line L25 to mix the vent gas introduced from the SOFC 30 to the air heat exchanger 50 through the 23rd piping line L23 and the air flowing into the air heat exchanger 50 through the 25th piping line L25 after being heated through the heating unit 80.

The second mixer 23 is provided at a connection point between the 23rd piping line L23 and the 25th piping line L25, and may supply a mixed gas through the second mixer 23 to the air heat exchanger 50.

Accordingly, the heating unit 80 may forcibly draw external air through the second air blower 81 and supply the drawn air into the heating unit 80 through the 26th piping line L26, and after heating the drawn air, supply the heated air to the second mixer 23 through the 25th piping line L25 to mix the heated air with the vent gas discharged from the SOFC 30, thereby further increasing the temperature of the mixed gas that is to be supplied to the air heat exchanger 50.

In this case, a temperature of external air heated through the heating unit 80 may be higher than a temperature of a vent gas discharged from the SOFC 30.

Meanwhile, nitrogen separated from hydrogen through an EHP 70 may be discharged to the outside through a 17th piping line L17.

Hereinafter, an SOFC recirculation system using an EHP according to a third embodiment of the present disclosure will be described.

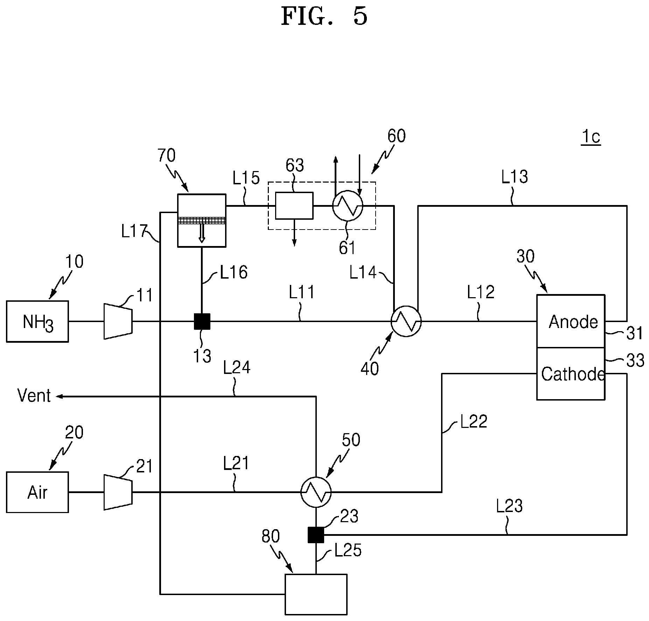

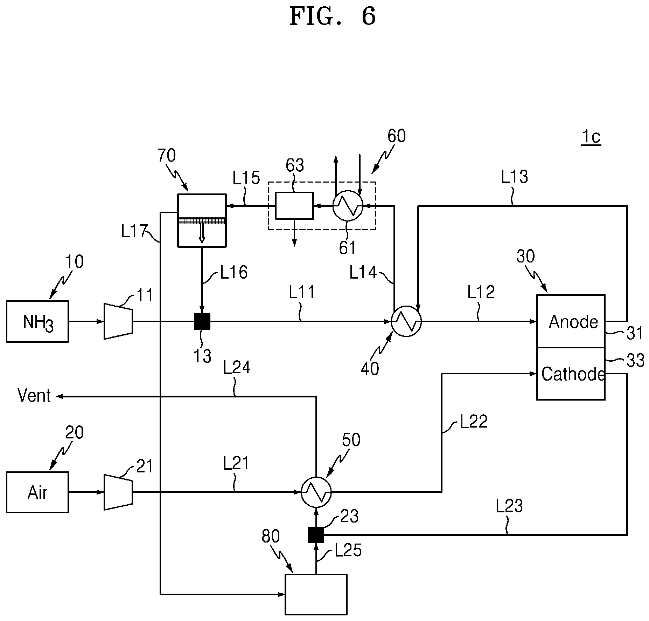

FIG. 5 is a schematic diagram showing an SOFC recirculation system using an EHP according to the third embodiment of the present disclosure. FIG. 6 is a schematic diagram showing a process in which, in an SOFC recirculation system using an EHP according to the third embodiment of the present disclosure, nitrogen or nitrogen and hydrogen discharged from the EHP is introduced into a heating unit and heated, and then the heated nitrogen or nitrogen and hydrogen are mixed with a vent gas discharged from an SOFC and heat-exchanged in an air heat exchanger.

The SOFC recirculation system using an EHP according to the third embodiment of the present disclosure has the same structure as the SOFC recirculation system using an EHP according to the second embodiment described above, except for a structure in which the EHP is connected to the heating unit, and therefore, a redundant description of the same configuration is omitted.

Referring to FIGS. 5 and 6, a heating unit 80 of an SOFC recirculation system 1c using an EHP according to the third embodiment of the present disclosure is connected at one end to a 17th piping line L17 of an EHP 70 and may receive, from the EHP 70, nitrogen from which hydrogen is removed.

In addition, the heating unit 80 is connected to one side of the 17th piping line L17, which is connected to the EHP 70 to discharge nitrogen from the EHP 70, and may receive a mixed gas including nitrogen and hydrogen from the EHP 70.

Thus, the heating unit 80 heats nitrogen from which hydrogen is removed, or a mixed gas including nitrogen and hydrogen, both of which are received from the EHP 70, and then supplies the heated nitrogen or nitrogen and hydrogen to the second mixer 23, and the heated nitrogen or nitrogen and hydrogen may be mixed with a vent gas supplied from the SOFC 30 through the second mixer 23 and may be then supplied to the air heat exchanger 50.

Hereinafter, an SOFC recirculation system using an EHP according to a fourth embodiment of the present disclosure will be described.

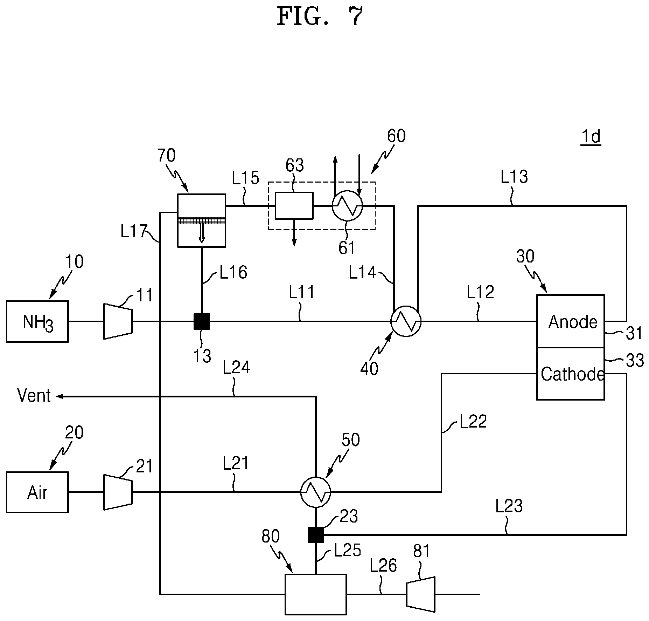

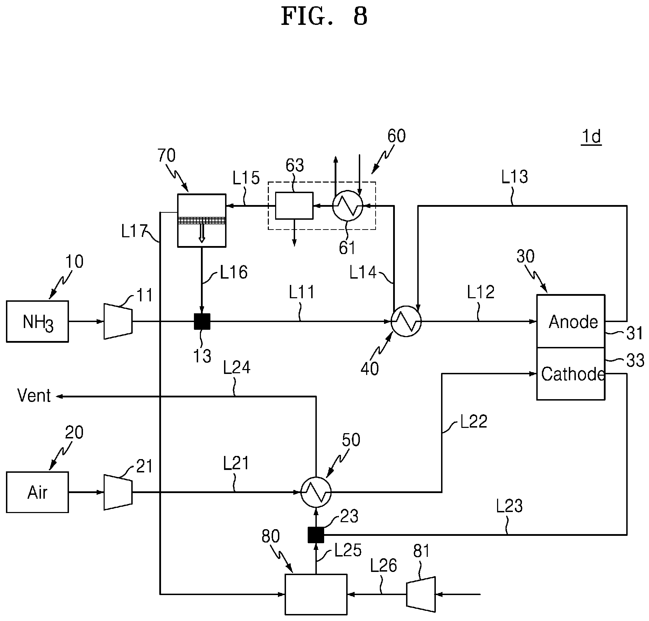

FIG. 7 is a schematic diagram showing an SOFC recirculation system using an EHP according to the fourth embodiment of the present disclosure. FIG. 8 is a schematic diagram showing a process in which, in an SOFC recirculation system using an EHP according to the fourth embodiment of the present disclosure, external air and nitrogen or nitrogen and hydrogen discharged from the EHP are introduced into a heating unit to be mixed and heated, and then the heated and mixed gas is mixed with the vent gas discharged from the SOFC and heat-exchanged in an air heat exchanger.

The SOFC recirculation system using an EHP according to the fourth embodiment of the present disclosure is configured to include the second and third embodiments, and redundant descriptions of the same configurations are omitted.

Referring to FIGS. 7 and 8, a heating unit 80 of an SOFC recirculation system 1d using an EHP according to the fourth embodiment of the present disclosure receives external air through a 26th piping line L26 and receives nitrogen from which hydrogen is removed, or a mixed gas including nitrogen and hydrogen from an EHP 70 through a 17th piping line L17, then mixes the supplied gas with the external air to heat the gas, and then supplies the heated gas to the second mixer 23, and after being mixed with a vent gas supplied from the SOFC 30 through the second mixer 23, the gas may be supplied to the air heat exchanger 50.

Here, a second air blower 81 may be driven to forcibly draw the nitrogen or the mixed gas including nitrogen and hydrogen from the EHP 70 and supply the drawn air into the heating unit.

In addition, the second air blower 81 may be driven to forcibly draw external air and supply the drawn air into the heating unit 80 through the 26th piping line L26.

As such, the heating unit 80 may receive external air, mix the external air with nitrogen or a gas including nitrogen and hydrogen discharged through the EHP 70 to heat a mixture, and mix the heated mixture with vent gas discharged from the SOFC 30 to supply the mixture to the air heat exchanger 50.

Accordingly, by significantly increasing a temperature of air supplied from the air supply unit 20 to the SOFC 30, compared to existing technology, the SOFC 30 may be operated to meet a temperature condition under high temperature.

Meanwhile, depending on requirements on site, the supply of gas or air to the heater may be selectively controlled, such as by supplying nitrogen or nitrogen and hydrogen to the heating unit 80 through the EHP 70 to heat the gas and then supply the heated gas to the air heat exchanger 50, or by drawing external air into the heating unit 80 to heat the drawn air and then supplying the heated air to the air heat exchanger 50.

If external air is drawn into the heating unit 80 and then heated and supplied to the air heat exchanger 50, nitrogen from which hydrogen is separated through the EHP 70 may be discharged to the outside through the 17th piping line L17 before or after heating the air. That is, nitrogen separated from a mixed gas may be discharged through the 17th piping line L17 from the EHP 70 and may be discharged through the heating unit 80 connected to the 17th piping line L17 and the 26th piping line L26 connected to the heating unit 80.

In addition, depending on a situation on site, if there is no need to raise the temperature of an air exchanger 50 to be a temperature of vent gas discharged from the SOFC 30 or higher, the heating unit 80 may remain in OFF state and then the nitrogen separated through the EHP 70 may be discharged to the outside by sequentially passing through the 17th piping line L17, the heating unit 80, and the 26th piping line L26.

Here, the heating unit 80 may serve as a passage for discharging nitrogen to the outside.

In addition, the second air blower 81 may forcibly draw nitrogen, which is discharged from the EHP 70, through the 17th piping line L17 into the heating unit 80 and then discharge the nitrogen to the outside through the 26th piping line L26.

In this case, a piping line according to the present disclosure may be provided with at least one valve (not shown) for controlling a flow rate of a fluid.

Meanwhile, the SOFC recirculation systems 1a, 1b, 1c, and 1d, each using an EHP, according to the present disclosure may utilize an existing a fuel cell, in which the durability and performance are degraded by use for a predetermined period, thereby reducing overall device costs.

That is, the EHP 70 applied to the SOFC recirculation systems 1a, 1b, 1c, and 1d using an EHP according to one embodiment of the present disclosure does not require oxygen reduction reaction because oxygen does not participate in the reaction, and accordingly, the existing fuel cells in which performance degradation and loss occur may be used as the EHP 70. For example, a used fuel cell used as the EHP 70 may be a proton exchange membrane fuel cell.

While the present disclosure has been described with reference to exemplary embodiments, it will be understood by those skilled in the art that various changes, modifications, additions, or deletions may be made without departing from the spirit and scope of the disclosure as set forth in the following claims, and such changes and modifications are intended to be included within the scope of the present disclosure.

## Claims

1. A solid oxide fuel cell (SOFC) recirculation system using an electrochemical hydrogen pump (EHP), comprising:
an SOFC configured to generate electricity through an electrochemical reaction by receiving ammonia and air and discharge a reaction product comprising nitrogen, hydrogen, and water vapor, and a vent gas having a reduced oxygen concentration;
an ammonia supply unit configured to supply the ammonia to the SOFC;
an air supply unit configured to supply the air to the SOFC; and
an EHP configured to separate only hydrogen from the reaction product of the SOFC and resupply the separated hydrogen to the SOFC.

2. The SOFC recirculation system of claim 1,
further comprising:
a fuel heat exchanger configured to exchange heat between the high-temperature reaction product discharged after reaction in the SOFC and the ammonia supplied to the SOFC;
an air heat exchanger configured to exchange heat between the high-temperature vent gas discharged after reaction in the SOFC and the air supplied to the SOFC; and
a condensation unit configured to condense the reaction product heat-exchanged through the fuel heat exchanger.

3. The SOFC recirculation system of claim 2,
wherein the condensation unit comprises a cooling heat exchanger configured to condense the water vapor through heat exchange with the reaction product supplied through the fuel heat exchanger; and
a drain unit configured to discharge water condensed through the cooling heat exchanger to an outside.

4. The SOFC recirculation system of claim 2, wherein the EHP separates the hydrogen from a mixed gas of the nitrogen and the hydrogen, and selectively mixes the separated hydrogen with the ammonia that is supplied from the ammonia supply unit to the fuel heat exchanger.

5. The SOFC recirculation system of claim 4, wherein the EHP controls an amount of hydrogen separated from the mixed gas by controlling a current load.

6. The SOFC recirculation system of claim 2, further comprising a heating unit configured to increase a temperature of the air supplied from the air supply unit.

7. The SOFC recirculation system of claim 6, wherein the heating unit is either a burner or a catalytic converter.

8. The SOFC recirculation system of claim 6, wherein the heating unit heats the vent gas discharged from the SOFC.

9. The SOFC recirculation system of claim 8, wherein the heating unit draws and heats external air, and mixes the heated external air with the vent gas to heat the vent gas.

10. The SOFC recirculation system of claim 6, wherein the heating unit receives, from the EHP, the nitrogen from which the hydrogen has been removed.

11. The SOFC recirculation system of claim 1, wherein the ammonia supply unit has a fuel blower provided at one side thereof to supply the ammonia to the SOFC.

12. The SOFC recirculation system of claim 1, wherein the air supply unit has an air blower provided at one side thereof to supply the air to the SOFC.

13. The SOFC recirculation system of claim 1, wherein the EHP operates at a temperature of 50°C to 100°C.

14. The SOFC recirculation system of claim 1, further comprising a control unit configured to control operation of the SOFC, the ammonia supply unit, the air supply unit, and the EHP.

15. The SOFC recirculation system of claim 14, wherein the control unit controls an amount of the separated hydrogen by controlling a current load applied to the EHP.
